**Europäisches Patentamt**

**European Patent Office**

**Office européen des brevets**

(19)

(11) Numéro de publication : **0 082 892**
**B1**

(12)

# FASCICULE DE BREVET EUROPÉEN

(45) Date de publication du fascicule du brevet :
**12.02.86**

(51) Int. Cl.⁴ : **G 21 C 19/06**

(21) Numéro de dépôt : **81201402.5**

(22) Date de dépôt : **29.12.81**

(54) Enveloppe de récupération pour élément combustible nucléaire avarié.

(43) Date de publication de la demande :
**06.07.83 Bulletin 83/27**

(45) Mention de la délivrance du brevet :
**12.02.86 Bulletin 86/07**

(84) Etats contractants désignés :
**AT BE CH DE FR GB IT LI LU NL SE**

(56) Documents cités :
**DE-B- 1 057 526**
**FR-A- 1 546 782**
**FR-A- 2 462 765**
**US-A- 2 524 430**
**US-A- 3 386 273**

(73) Titulaire : **ATELIERS DE CONSTRUCTIONS ELECTRI-
QUES DE CHARLEROI (ACEC) Société Anonyme
Avenue Lloyd George 7
B-1050 Bruxelles (BE)**

(72) Inventeur : **Fabris, Mirko
Rue de l'Argayon 5
B-1400 Nivelles (BE)**

Jouve, 18, rue St-Denis, 75001 Paris, France

## Description

Dans une centrale nucléaire, la durée de vie de l'élément combustible se limite à quelques années seulement. Cette durée de vie est encore écourtée, si une défectuosité quelconque est constatée au niveau d'un seul constituant de l'élément combustible. Or chaque élément combustible comporte un grand nombre de constituants sous forme de crayons dont l'avarie de l'un d'entre eux conduit à la mise hors service de l'ensemble. Ces crayons, formés de pastilles empilées dans une gaine métallique étanche, sont disposés en botte dans une structure, de section carrée, constituée de deux plaques réunies entre elles par une série de tubes d'assemblage sur lesquels sont enfilées, à espaces réguliers, des grilles percées de trous servant au maintien des crayons. La plaque supérieure sert de système de levage de l'élément combustible. La plaque inférieure est munie de quatre pattes disposées en coin et servant de surface de pose de l'élément combustible sur le fond de la piscine. Lorsque, dans un élément combustible, on constate qu'un crayon est endommagé, on retire l'élément combustible défectueux pour le mettre hors service.

Depuis quelque temps cependant, par souci d'économie, il s'est développé une technique de récupération des crayons restés intacts dans les éléments combustibles défectueux. Cette technique demande une série de manipulations au cours desquelles il y a grand risque pour que les crayons cassés ou abîmés se détachent de l'élément combustible et tombent dans la piscine en la contaminant.

Pour éviter ces inconvénients, l'élément combustible défectueux est placé dans une enveloppe retenant tous les débris.

De façon à utiliser le système de levage initialement prévu pour l'élément combustible, cette enveloppe doit se solidariser à la structure même de l'élément combustible.

La présente invention est relative à une enveloppe de récupération comme revendiquée dans la revendication 1.

L'invention est détaillée dans les figures suivantes.

La figure 1 représente une coupe de l'enveloppe de récupération et du dispositif d'accrochage.

La figure 2 détaille le dispositif d'accrochage.

Les figures 3A, 3B, 4A et 4B montrent le dispositif de commande.

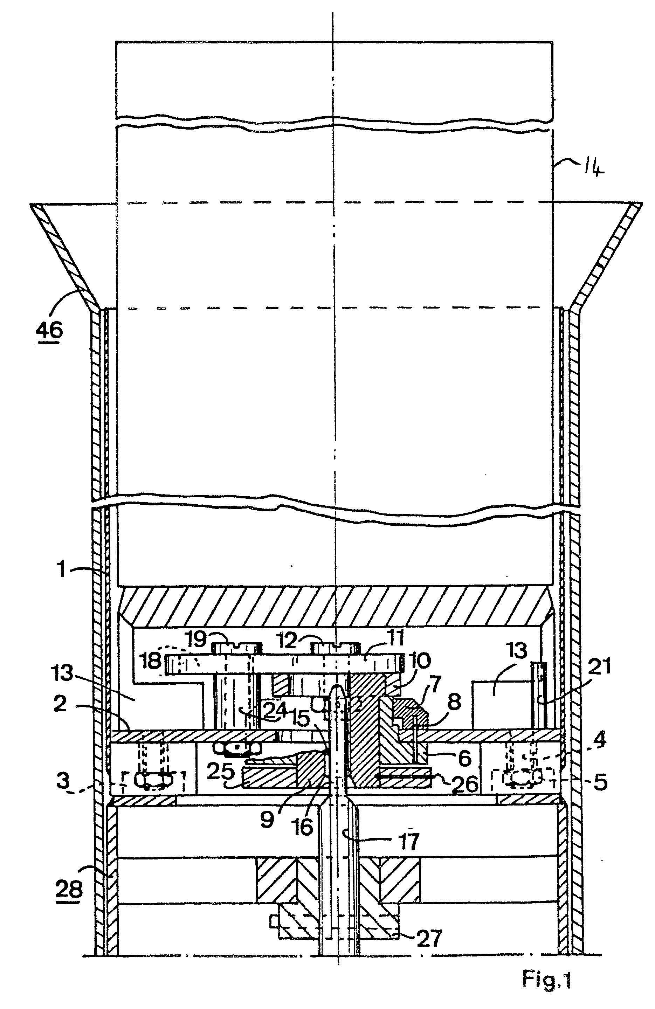

A la figure 1, l'enveloppe de récupération est constituée d'un corps 1 à section carrée et d'un fond 2 nanti de quatre pieds 3 rendus solidaires du fond 2 par des goujons 4 et des écrous 5. Le fond 2 est équipé en son centre d'une bague coussinet 6 et d'une buselure 7, rendues solidaires du fond 2 par une série de broches 8, pour permettre le déplacement d'un moyeu 9 nanti de deux bras 10 diamétralement opposés.

Ces bras 10 servent de supports à deux doigts de serrage 11, chacun articulé en bout de bras 10 par un axe 12. Les doigts de serrage 11 s'engagent dans deux des quatre pattes 13 de l'élément combustible 14.

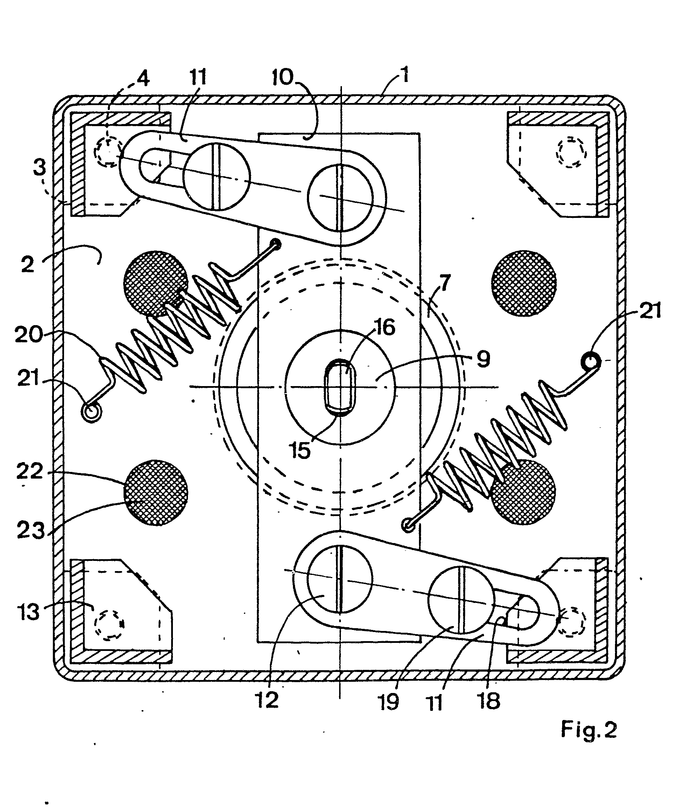

Le moyeu 9 porte en son centre un trou conformé 15 pour recevoir une extrémité 16 d'un arbre de commande 17. L'extrémité 16 est de forme adaptée à transmettre un couple de rotation. La figure 2 est une vue en plan du dispositif d'accrochage. Les doigts de serrage 11 sont nantis d'une boutonnière 18 qui en collaboration avec des broches de guidage 19, fixées au fond 2, guident les doigts de serrage 11 pour permettre selon le sens de rotation de l'arbre de commande 17 l'engagement ou le dégagement des doigts de serrage 11 dans deux pattes 13, diagonalement opposées de l'ensemble des quatre pattes 13 supportant l'élément combustible 14.

Deux ressorts 20, chacun accroché d'une part à une broche 21 fixée au fond 2 et d'autre part à un bras 10, travaillent en traction pour maintenir les doigts de serrage 11 en position engagée dans les pattes 13.

Le fond 2 est nanti de trous 22 servant à l'écoulement des eaux avec chacun un treillis 23 destiné notamment à retenir dans l'enveloppe de récupération les débris susceptibles de contaminer la piscine.

La figure 1 montre encore les broches de guidage 19 fixées sur le fond 2 de l'enveloppe et sur lesquelles sont enfilées une bague 24 servant à supporter le doigt de serrage 11.

Le moyeu 9 est nanti d'une extrémité filetée servant à y fixer une rondelle-écrou 25 maintenue en place par une broche 26. Un palier 27 solidaire d'un châssis 28 sert au guidage de l'arbre de commande 17.

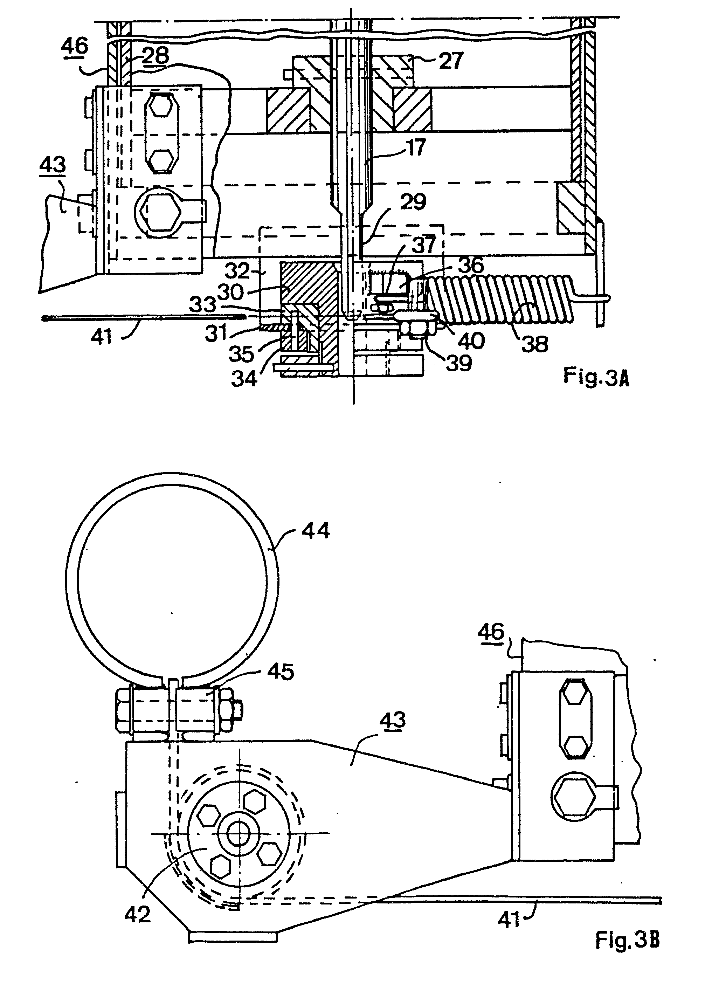

La figure 3 est une vue en coupe montrant le dispositif de commande. Sur cette figure apparaît un autre palier 27 solidaire du châssis 28 guidant l'autre extrémité de l'arbre de commande 17.

L'arbre de commande 17 présente une seconde extrémité 29 conformée pour collaborer avec un trou fait au centre d'une bague de commande 30 pour la transmission d'un couple de rotation. L'extrémité 29 de l'arbre de commande 17 est soutenu par un contre-pivot 31 fixé à une pièce centrale 32 solidarisée au châssis 28.

La bague de commande 30 pivote dans un coussinet 33, supporté par le contre-pivot 31 et rendu solidaire de celui-ci par une rondelle-écrou 34. Une broche 35, mise à travers la rondelle-écrou 34, le contre-pivot 31 et le coussinet 33 assure l'indesserrabilité de la rondelle-écrou 34 par rapport au filet extérieur du coussinet 33.

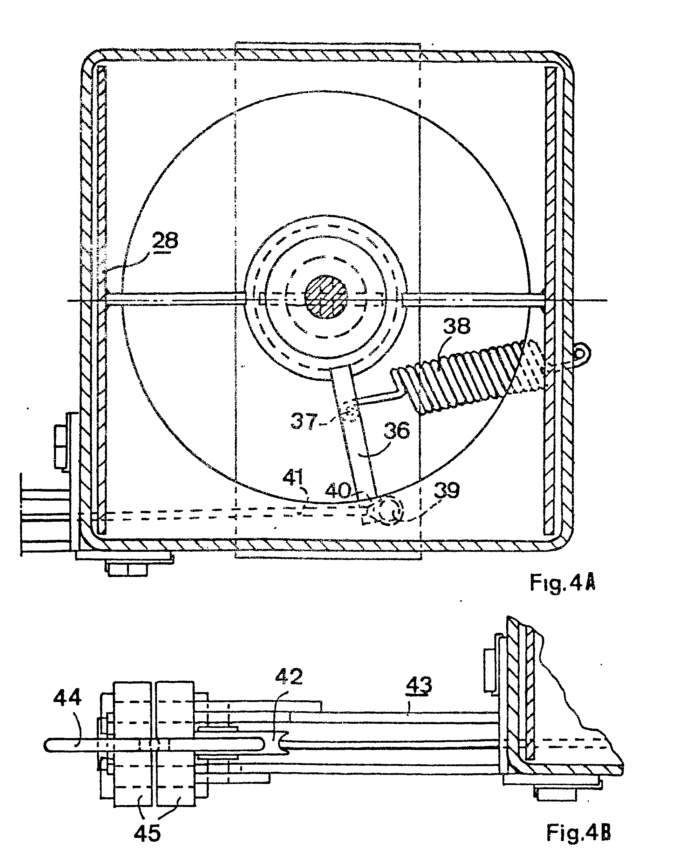

La figure 4 représente le dispositif de commande dans une vue en plan. La bague de commande 30 est nantie d'un bras de manœuvre 36 portant un premier goujon 37 servant de point d'accrochage à un ressort 38 et un second goujon 39 situé à l'extrémité du bras de manœuvre 36 et servant de point d'accrochage à un œillet

d'extrémité 40 d'un câble 41. Le ressort 38, accroché d'une part au goujon 37 du bras de manœuvre 36 et d'autre part au châssis 28, travaille en traction pour assurer le rappel du bras de manœuvre 36 dans sa position normale correspondant sur la figure 2 à l'engagement des doigts de serrage 11 dans les pattes 13 du panier. Des écrous vissés sur les goujons 37 et 39 et maintenus en place par des goupilles fendues fixent respectivement le ressort 38 et l'œillet 40 du câble 41 avec la sécurité requise pour le matériel nucléaire.

D'une manière générale dans les dispositifs d'accrochage et de commande ainsi que dans les superstructures nécessaires à l'utilisation de cette enveloppe de récupération, chaque vis, écrou ou boulon est prémuni contre le desserrage par l'emploi de goupille fendue, de broche ou de tête pliable pour atteindre le niveau de sécurité exigé dans le matériel nucléaire.

Une poulie 42 placée dans un support 43 sert de renvoi au câble 41 dont l'autre extrémité est fixée par pinçage à un anneau de levage 44. Cet anneau de levage 44 est ouvert pour permettre à deux mâchoires 45, soudées à chaque extrémité de cet anneau de levage 44, de se rapprocher sous l'action de deux boulons pour pincer l'extrémité de câble 41.

Pour manœuvrer le dispositif d'accrochage il suffit de tirer sur l'anneau de levage 44 à l'aide d'une longue perche muni d'un crochet.

En tirant l'anneau 44, on actionne le bras de manœuvre 36 à l'aide du câble 41. Ce bras de manœuvre 36 solidaire de la bague de manœuvre 30 fait pivoter l'arbre de commande 17, y inséré, qui transmet le mouvement jusqu'au moyeu 9 dont les deux bras 10 dégagent les doigts de serrage 11 des pieds 13 de l'élément combustible 14.

Pour chausser un élément combustible avarié de son enveloppe de récupération, il faut utiliser un panier 46 ayant à sa base le châssis 28 servant de support.

L'enveloppe de récupération est d'abord introduite dans le panier 46 en respectant une certaine orientation de manière à faire coïncider la conformation intérieure 15 du moyeu 9 et l'extrémité 16 de l'arbre de commande 17.

L'enveloppe de récupération étant en place, il suffit d'y descendre l'élément combustible avarié 14 et en bout de course de tirer l'anneau de commande 44 pour mettre les doigts de serrage 11 en position dégagée. Lorsque l'élément combustible 14 repose sur le fond 2 de l'enveloppe de récupération, on ramène l'anneau de commande 44 à sa position de repos permettant ainsi l'insertion des doigts de serrage 11 dans deux pieds 13 de l'élément combustible 14.

Dans l'utilisation principale prévue, l'enveloppe de récupération reste accrochée en permanence à l'élément combustible avarié 14 quelles que soient les manipulations opérées par la suite. De la sorte les risques de contamination de la piscine sont fortement réduits.

## Revendications

1. Enveloppe de récupération pour disposer coaxialement un élément combustible nucléaire avarié (14) et comportant des pattes (13), caractérisé en ce que l'enveloppe de récupération comporte un fond (2) et des pieds (3) pour reprendre le poids de l'ensemble constitué par l'élément combustible (14) et l'enveloppe de récupération et en ce que le fond (2) de l'enveloppe de récupération est muni de doigts de serrage (11) qui, actionnés simultanément par un dispositif d'accrochage comportant un élément de transmission (9) muni d'une empreinte (15) dans laquelle s'engage une extrémité d'un arbre de commande (17) co-axial à l'élément de transmission (9), s'engagent dans les pattes (13) de l'élément combustible (14) pour accrocher l'enveloppe de récupération à l'élément combustible (14).

2. Enveloppe de récupération selon la revendication 1, caractérisée en ce que l'arbre de commande (17) est monté sur un châssis (28) servant de support soit à l'élément combustible (14), soit à l'enveloppe de récupération, soit à l'ensemble constitué par l'élément combustible (14) et l'enveloppe de récupération.

3. Enveloppe de récupération selon une des revendications précédentes, caractérisée en ce que l'élément de transmission est un moyeu (9) qui est disposé au centre du fond (2) de l'enveloppe de récupération et qui est muni de l'empreinte (15) conformée pour recevoir l'extrémité (16) de l'arbre de commande (17), en ce que ce moyeu (9) porte au moins un bras (10) en bout duquel pivote un doigt de serrage (11) muni d'une boutonnière (18) dans laquelle est engagée une broche de guidage (19) et en ce qu'un ressort (20) maintient le doigt de serrage (11) en position engagée dans la patte (13) de l'élément combustible (14).

4. Enveloppe de récupération selon une des revendications précédentes, caractérisée en ce que le fond (2) est percé de trous (22) munis de treillis (23).

5. Enveloppe de récupération selon une des revendications précédentes caractérisée en ce que le dispositif d'accrochage de l'enveloppe de récupération est commandé par une boucle de levage (44) fixée en bout d'un câble (41) qui est relié à un levier de manœuvre (36) solidaire d'une bague de commande (30) dans laquelle est engagée une extrémité de l'arbre de commande (17).

## Claims

1. Recovery envelope for the coaxial positioning of a failed nuclear fuel element (14) comprising supporting brackets (13), characterised in that the recovery envelope comprises a base (2) and feet (3) for taking the weight of the assembly constituted by the fuel element (14) and the recovery envelope, and in that the base (2) of the recovery envelope is provided with clamping dogs (11) which, actuated simultaneously by a securing device comprising a transmission element (9) provided with a recess (15) wherein there engages one end of a control shaft (17) coaxial with the transmission element (9), engage in the supporting brackets (13) of the fuel element (14) for securing the recovery envelope to the fuel element (14).

2. Recovery envelope according to claim 1, characterised in that the control shaft (17) is mounted on a frame (28) serving as a support for either the fuel element (14), or the recovery envelope, or the assembly constituted by the fuel element (14) and the recovery envelope.

3. Recovery envelope according to one of the preceding claims, characterised in that the transmission element is a hub (9) which is arranged at the centre of the base (2) of the recovery envelope and which is provided with the recess (15) shaped to receive the end (16) of the control shaft (17), in that this hub (9) comprises at least one arm (10) at the end there is pivotably arranged a clamping dog (11) provided with a slot (18) wherein a guide pin (19) is engaged, and in that a spring (20) holds the clamping dog (11) in the engaged position in the supporting bracket (13) of the fuel element (14).

4. Recovery envelope according to one of the preceding claims, characterised in that the base (2) is formed with holes (22) provided with mesh screens (23).

5. Recovery envelope according to one of the preceding claims, characterised in that the securing device of the recovery envelope is controlled by a lifting loop (44) fixed on the end of a cable (41) which is connected to an operating lever (36) integral with a control ring (30) in which one end of the control shaft (17) is engaged.

**Patentansprüche**

1. Schutzhülle zur koaxialen Anordnung eines mit Ansätzen (13) versehenen beschädigten Kernbrennstoffelementes (14), dadurch gekennzeichnet, daß die Schutzhülle einen Boden (2) und Füße (3) zur Aufnahme des Gewichts des Brennstoffelementes (14) und der Schutzhülle aufweist, und daß der Boden (2) der Schutzhülle mit Spannfingern (11) versehen ist, die durch eine Koppelvorrichtung gleichzeitig betätigt werden, die ein Übertragungselement (9) aufweist, das mit einer Vertiefung (15) versehen ist, in die ein Ende einer zu dem Übertragungselement (9) koaxialen Steuerwelle (17) eingreift, und dabei in die Ansätze (13) des Brennstoffelementes (14) eingeschoben werden, um die Schutzhülle an das Brennstoffelement (14) anzukoppeln.

2. Schutzhülle gemäß Anspruch 1, dadurch gekennzeichnet, daß die Steuerwelle (17) auf einem Untergestell (28) montiert ist, das als Halterung entweder für das Brennstoffelement (14), oder die Schutzhülle, oder die Einheit aus dem Brennstoffelement (14) und der Schutzhülle dient.

3. Schutzhülle gemäß einem der vorhergehenden Ansprüche, dadurch gekennzeichnet, daß das Übertragungselement eine Nabe (9) ist, die in der Mitte des Bodens (2) der Schutzhülle angeordnet ist und mit der Vertiefung (15) versehen ist, wobei diese Vertiefung (15) so ausgebildet ist, daß sie das Ende (16) der Steuerwelle (17) aufnehmen kann, daß diese Nabe (9) mindestens einen Arm (10) aufweist, an dessen Ende ein Spannfinger (11) schwenkbar angeordnet ist, der mit einer länglichen Aussparung (18) versehen ist, in die ein Führungsdorn (19) eingreift, und daß eine Feder (20) den Spannfinger (11) in einer Position hält, in der er in den Ansatz (13) des Brennstoffelementes (14) eingeschoben ist.

4. Schutzhülle gemäß einem der vorhergehenden Ansprüche, dadurch gekennzeichnet, daß der Boden (2) Bohrungen (22) aufweist, die mit Gittern (23) versehen sind.

5. Schutzhülle gemäß einem der vorhergehenden Ansprüche, dadurch gekennzeichnet, daß die Koppelvorrichtung der Schutzhülle durch einen Hebering (44) gesteuert wird, der am Ende eines Seils (41) befestigt ist, das mit einem Betätigungshebel (36) verbunden ist, der mit einem Steuerring (30) fest verbunden ist, in den ein Ende der Steuerwelle (17) eingreift.

Fig.1

Fig. 2

Fig.3A

Fig.3B

Fig. 4A

Fig. 4B